# EUROPEAN PATENT SPECIFICATION

(11) **EP 3 143 877 B1**
(45) Date of publication and mention of the grant of the patent: **24.04.2019**
(21) Application number: 16188655.1
(22) Date of filing: 13.09.2016
(51) Int. Cl.: A21D 8/04

(54) **METHOD FOR MAKING BREAD USING YEAST PRODUCED FROM MILK SUBSTRATE**
VERFAHREN ZUR HERSTELLUNG VON BROT UNTER VERWENDUNG VON HEFE AUS MILCHSUBSTRATEN
MÉTHODE POUR FAIRE DU PAIN EN UTILISANT DE LA LEVURE PRODUITE SUR UN SUBSTRAT LAITIER

(30) Priority: 14.09.2015 IT UB20153591
(43) Date of publication of application: 22.03.2017
(73) Proprietor: Ecamricert S.r.l., 36030 Monte di Malo (Vicenza) (IT); Deppieri S.r.l., 30174 Venezia (IT)
(72) Inventor: Deppieri, Davide, 31021 Mogliano Veneto (Treviso) (IT); Cesaro, Vanna, 30020 Fossalta di Piave (Venezia) (IT)
(74) Representative: Manfrin, Marta

(56) References cited:
- CN-B- 102 232 504
- JP-A- 2007 089 497
- Maria Fremlin: "Water-kefir sourdough bread", , 5 December 2005 (2005-12-05), XP002758243, Retrieved from the Internet: URL:http://maria.fremlin.de/recipes/wksour dough.html [retrieved on 2016-05-25]
- anonymous: "Kerfir fermented bread dough", Homestead Lady , 28 April 2014 (2014-04-28), XP002758244, Retrieved from the Internet: URL:http://www.homesteadlady.com/kefir-fer mented-bread-dough-no-yeast/ [retrieved on 2016-05-25]
- Anonymous: "Kefir bread", Chikousky Farms , 2009, XP002758245, Retrieved from the Internet: URL:http://www.chikouskyfarms.com/article/ 11/kefir-bread [retrieved on 2016-05-25]
- Anonymous: "How to make a sourdough bread starter", Rejoice In Life.com , 12 September 2003 (2003-09-12), XP002758246, Retrieved from the Internet: URL:http://web.archive.org/web/20030912231 024/http://www.rejoiceinlife.com/recipes/s tarter.php [retrieved on 2016-05-31]
- Dominic N Anfiteatro: "Nutritional & Chemical composition of milk kefir", , 26 June 2015 (2015-06-26), page 5PP, XP002766479, Retrieved from the Internet: URL:http://web.archive.org/web/20150810074 435/http://users.sa.chariot.net.au/~dna/ke fir-composition.htm [retrieved on 2017-01-27]
- Anonymous: "Milk Kefir strains", Yemoos Nourishing Cultures , 16 June 2010 (2010-06-16), XP002758247, Retrieved from the Internet: URL:http://www.yemoos.com/milkstrains.html [retrieved on 2016-05-31]

## Description

The present disclosure relates in general to the sector of breadmaking, preferably, but not exclusively, for the production of loaf bread. The main subject concerns a method for making bread without using so-called compressed yeast or beer yeast and/or a natural ambient yeast. More particularly, the present disclosure relates to a method for making bread where the leavening is performed using leavening agents of the biological type based on milk and pure cultures with low activity.

"Yeasts" is understood as meaning a particular group of unicellular fungi having the characteristic property of being able to convert the sugars by means of reductive (fermentation) or also oxidative mechanisms (G.Quaglia, Scienza e Tecnologia della panificazione, page 223). The strain of yeast commonly used in breadmaking is *Saccaromyces cerevisiae,* so-called beer yeast which is added to the flour and water mixture. During kneading the dough incorporates air and the yeast uses the oxygen in order to breath; after kneading, since the oxygen has been all used up by the yeast, the latter focuses its metabolism on fermentation. The carbon dioxide produced dissolves initially in the dough; thereafter, once saturated, it accumulates in gaseous form so as to exert on the gluten mesh a pressure which allows the dough to swell. During fermentation the yeast uses monosaccharides which may enter into the cell by means of diffusion. The disaccharides are unable to enter into the cell unless they are first subjected to enzymatic hydrolysis. The starch is not directly used by the yeast, but may be attacked by the alpha and beta amylase present in the flour, providing fermentable sugars. During the course of fermentation, alongside the ethyl alcohol and carbon dioxide, secondary products, such as glycerin, acetaldehyde and higher alcohols, are also formed. Other products which are constantly present are acetic acid, succinic acid and lactic acid. The formation of carbonic acid and organic acids results in lowering of the pH and an increase in the acidity of the dough, despite the strong buffering power of the proteins (B. Carrai, Arte bianca, page 72)
Breadmaking using "mother yeast" or "natural yeast" produced and refreshed with flour forms part of the tradition associated with some types of bread and confectionery products in Italy and is used in some ovens for small-batch production. In the context of the present disclosure, the expression "natural yeast" (acid mixture or acid yeast) is understood as meaning a mixture formed by water and flour which ferment naturally owing to the presence of bacteria which are typically lactic and yeasts. The microorganisms present in natural yeast form a complex biological system, are supplied directly by the flour and by the working environment and are responsible for the fermentation process.

The use of mother yeast has the advantage that it results in a product which has superior organoleptic properties, but is less controllable since the result is not always reproducible and leavening may be variable because by definition it is "ambient". This variability has meant that the technique of breadmaking using "mother yeast" is not particularly suitable for application on an industrial production level.

For this reason, the breadmaking industry over time has preferred to use the yeast *Saccharomyces cereviasiae* since it ensures constant and reproducible leavening times and results. These characteristics are of fundamental importance for companies who only in this way manage to control their production outputs and survive in economic terms. The disadvantage of using so-called beer yeast consists in the quality of the bread which is poor owing to too rapid fermentation due to tool large quantities of yeast in the mixture (Giorilli Lauri, II pane un'arte una tecnologia, page 81).

Also known are attempts to make bread and to leaven a bread mixture using milk yeasts. In particular, attempts have been made to develop a breadmaking method which allows the production of bread with organoleptic characteristics which are typical of a bread product made using "natural yeast", but with the advantages of being able to control the handling and final result, typical of so-called beer yeast.

To the knowledge of the author of the present disclosure, the use of milk yeasts is something which, although already tested, has not been successful. In fact, it has not yet been possible to obtain satisfactory increases in the volume of the bread and hitherto there has also been a certain complexity in identifying the population of a breadmaking colony which is, by definition, variable, using milk-based microorganisms.

In the context of the present disclosure, the term "milk yeasts" or "milk-substrate yeasts" is understood as meaning microorganisms which are alive in a medium or environment comprising milk or milk derivatives and which may contribute to fermentation and leavening of the bread. Milk yeasts or milk-substrate yeasts are yeasts produced exclusively from milk substrate, in which there are no added yeasts, such as, for example, beer yeast. The microorganisms are lactic bacteria, namely they are microorganisms (m.o.) which are heterotrophic, gram positive, immobile and non-spore producing, anaerobic or microaerophilic, capable of metabolizing the carbohydrates to produce lactic acid.
Yeasts produced exclusively from milk substrate means that they are produced from a base consisting of the milk of cows, sheep or other animals. In other words they involve the growth and controlled replication of a fermented compound of milk origin for leavening of the bread.

In practice, the growth and the replication of yeast media from milk, bacteria and streptococci to produce bread does not involve the use of other yeasts and is a process which involves the reproduction of lactic bacteria, preferably belonging to the lactobacilli and streptococci family, by means of nutrition of the milk components. In fact, these microorganisms reproduce by feeding off sugars (sucrose) contained in the milk; the sugars are converted mainly into carbon dioxide and to a lesser extent into alcohol, such as ethanol, into lactic acid and acetic acid. Control indicators may be used to measure the reproduction rate and the controlled composition of the invention in percentage terms per unit of weight, for the yeasts, the bacteria and the streptococci and the products derived from the conversion of the sugars. They depend on external factors which are difficult to control automatically and on comparison of their measurements with reference values.

The milk yeast is in a concentration of less than 10⁹ CFU/g (colony-forming units per gramme), preferably less than 10⁷ CFU/g and even more preferably of the order of 10⁶ CFU/g. For example, the presence of yeasts such as beer yeast is excluded, these having a prevalent power at a higher competitive level since in a concentration of 10⁹ CFU/g.

Also to be excluded are milk yeasts contained in commercial products such as kefir or other products in which the pure culture yeasts are added to the milk in concentrations equal to or greater than 10⁹ CFU/g. Further methods are known from "Water-kefir sourdough bread", XP002758243, patent application No JP 2007 089497 A, "Kerfir fermented bread dough", XP002758244; "Kefir bread", XP002758245; Chinese patent CN 102 232 504 B; and "How to make a sourdough bread starter", XP002758246.

The present disclosure therefore departs from the technical problem of providing a method for making bread using milk yeasts which is able to overcome the aforementioned drawbacks with reference to the prior art and/or achieve further advantages.
This is obtained by providing a method for making a bread food product according to the independent claim 1. The technical problem mentioned is also solved by means of a use according to the respective independent claim.

In particular, a proposed solution forming the basis of the present disclosure consists in the recognition that the use of milk-based yeast alone (fermented separately) does not have sufficient leavening power since its development on a flour-free base is unable to influence immediately the rheology of the mixture (C. Hoseney, Principles of Cereal Science and Technology, page 247). Therefore, it is necessary to inoculate this milk base using flour and reinforce this leavening action with the inoculation of pure cultures of microorganisms which have a strong leavening capacity.

In particular, the method includes at least two stages wherein, during a first step (or first inoculation step), a first unit or amount of flour is mixed with milk yeast and, during a second step (or second inoculation or refreshing step), a second dose or amount of flour is mixed with pure cultures of microorganisms. The two amounts or doses of flour with the added milk yeast and pure microorganism cultures are subjected to fermentation.

Thereafter, a third dose or amount of flour with the addition of suitably concentrated milk yeast is prepared and added to the first two doses in order to start a leavening step.

Preferably, in an embodiment of the present disclosure, in each of the three steps an amount of flour ranging between 20% and 40%, more preferably between 45% and 25% and even more preferably between 30% and 40%, of the total amount of flour is used.

It has thus been possible to establish that by means of the combined use of pure cultures and complex cultures it is possible to achieve optimum leavening results.

According to the present disclosure, the aforementioned pure cultures include *Lactobacillus sanfranciscensis* and /or *Leuconostoc citreum.* The inoculation of the two microorganisms may be performed based on the data provided in the literature, for example the data described in "Accelerated Sourdough French bread", pages 778-782, Baking Science & Technology, Vol. 2, Third edition, E. J. Pyler.

In the context of the present disclosure, the term "pure colony" or "axenic colony" is understood as referring to a population of organisms derived from a single, initial, living organism. The pure culture is of considerable importance in the context of microbiology, since it allows a single microbial strain to be isolated from a mixture containing microorganisms of different species or of the same species, but different strains. The cell population (or colony) which has been taken into consideration and has been isolated may be analyzed, and the organism forming it may be identified and studied.

An advantage of the breadmaking method according to the present disclosure and a unique feature of this leavening method is that it allows bread, understood as being a leavened food product, to be produced using only three ingredients necessary for making the bread, such as flour, fermented milk and salt (it should be noted that salt may be regarded as being a necessary ingredient since it has the structuring function of gluten; it is theoretically possible to make bread using two ingredients, but a bread such as loaf bread, where it is essential to achieve a given volume, certainly cannot be obtained. The yeast is not an ingredient per se of bread, since the yeast is not added. It is in fact the combination of time, temperature, enzymatic patrimony and refreshing operations which triggers the yeast in the milk, without any additional component, in the case where, as mentioned, the yeast is milk yeast, i.e. yeast which is produced directly from the milk substrate in the aforementioned concentrations, of less than 10⁹ CFU/g, preferably less than 10⁷ CFU/g and even more preferably of the order of 10⁶ CFU/g, without the yeast being added to the milk or other milk products such as kefir, or also using only two ingredients such as flour and fermented milk, if salt is not used.

In particular, the author of the present disclosure has noted that hitherto the making of loaf bread has involved the use of a certain amount of fats and sugars and salt. Basically, as a result of the method according to the present disclosure and the fact that pure colonies are used in addition to the milk yeast, the addition of fats and sugars is not necessary.
In particular, in the context of the present disclosure, the expression "three ingredients" or "two ingredients" is understood as meaning that breadmaking is performed without the addition of ingredients which are not essential for breadmaking, such as fats and sugars, and includes only fermented milk (including therefore yeasts) or flour. In other words it may be stated that the ingredients are three in number, namely flour, milk and salt. Water as such is not even added since the milk is sufficient. According to the some researchers (C. Hoseney, Principles of Cereal Science and Technology, page 231: "The minimum formula for bread is flour, yeast, salt and water. If any one of these ingredients is missing, the product is not bread") this innovation is such that the resultant product cannot be defined as "bread", in accordance with the definition of "bread" provided by Italian legislation whereby the product is obtained from the total or partial baking of a suitably leavened dough prepared using wheat flour, water and yeast, with or without the addition of common salt (Art. 14, Law No. 580 dated 4 July 1967). For this reason, in the context of the present disclosure, the term "bread" may be understood, in the broad sense, as a leavened food product.

In connection with "milk based yeast" for industrial production characterization of this "yeast" from a microbiological point of view is essential because of the presence of lactobacilli, streptococci and yeasts, together with its stability and reproducibility over time. In particular, a "milk-based mother yeast" or "milk-based yeast" is a complex sample formed by a mixed population of microorganisms derived from a milk base or a derived use.

Techniques for preparing a milk-based yeast are described, for example, in Patent Application No. ITVE20130041 in the name of the same proprietor and cited herein by way of reference source.
It is pointed out the microorganisms of a milk-based yeast may include bacteria very similar to those of a natural yeast. In fact, the "milk-based yeast" used in the context of the present disclosure includes predominantly four strains such as *Saccharomyces cerevisiae, Lactobacillus Kefiranofaciens, Lactococcus lactis and Acetobacter orientalis,* which may be identified in a stable manner over time as described in the co-pending patent application filed on the same day in the name of Ecamricert, allowing a stable use of the colony.

Further characteristic features and modes of use forming the subject of the present disclosure will become clear from the following detailed description of a preferred example of embodiment thereof, provided by way of a non-limiting example.

It is evident, however, that each embodiment forming the subject of the present disclosure may have one or more of the advantages listed above; in any case it is not required that each embodiment should have simultaneously all the advantages listed.

More particularly, in the continuation of the present detailed description, particular reference will be made to a method for making bread with reference to a number of examples of breadmaking.

In the context of the present disclosure, the expression "lactic bacteria" is understood as meaning the bacteria which are the fundamental microbiological component of natural yeast and which represent, together with the yeasts, the microorganisms with the greatest number of applications in connection with the preparation of food. Propagation of the natural yeast and maintenance of its fermentation activity is performed by means of the "refresh" technique which consists, according to the prior art, in the periodic addition of water and flour, before each fermentation cycle, in order to ensure a suitable supply of nutrients and establish selective environmental conditions for the microorganisms of interest. Also in connection with the present disclosure, the term "refresh" is understood as meaning a step where flour with the addition of a biological leavening agent and milk (not containing water as such) is added to an initial inoculum before a preparation cycle. The microflora of the natural yeast is characterized by a great variability of species and strains. The microbial ecology of natural yeast is influenced by endogenous factors (chemical and microbiological composition of the mixture) and exogenous factors (temperature, activity of the water, pH). In particular, the parameters of the process, such as activity of the water, quantity and composition of the starters, number of refreshes and duration of the fermentation, have a significant effect on the microbial ecology of the natural yeast, favouring the selection and development of the lactic microflora and yeasts compared to that of other microorganisms which naturally contaminate the flousr or the environments where the mixture is worked. Among the traditional natural yeasts heterofermentative lactic bacteria represent the dominant species of the fermentation process. The first steps of the fermentation process involve the development of a number of species belonging to the genera *Leuconostoc* and *Weissella,* which appear to play a part in favouring the growth of lactobacilli (*L*. *casei, L. delbrueckii, L. farciminis, L. plantarum, L. brevis, L. buchneri, L. fermentum*), which will subsequently become the dominant species in connection with their capacity for adaptation.

The fermentation activity of the lactic bacteria results in activation of a series of metabolic and enzymatic processes which influence in a given manner the technological properties (for example it improves the workability of the dough) as well as nutritional, organoleptic and conservation properties of the finished product. These processes comprise: the activation of the phytases present in the flour with the consequent increase in the availability of the nutrients, the action of proteolytic enzymes, the production of aromatic volatile compounds, the production of compounds with anti-bacterial and anti-fungal properties, improvement of the structure, volume, softness and conservation.

The term "fermented milk" resulting from use of the lactose by the spontaneous microflora is understood as meaning a process which may give rise to different food products including yogurt, kefir, Tibetan fermented milk and yakult fermented milk and similar preparations. To date the fermented milks produced result both from the conservation of different cultural traditions and from the development of new food technologies due to new scientific knowledge. Also from a microbiological point of view their composition is very varied, but in all of them there is at least one lactic fermenting agent able to cause lactic fermentation of the lactose. On occasions this main fermentation may be accompanied by alcoholic fermentation (G.Tiecco, Igiene e tecnologia alimentare, page 113), as in the case of "milk yeast".

Lactic bacteria are gram-positive bacteria, cocci or bacilli, are generally found in colonies and may form chains or groups. They are non spore-producing, with negative catalysis and devoid of cytochromes (with a few exceptions), having anaerobic, but aerotolerant habits. Owing to the introduction of techniques which allow the genetic characterization of the microorganisms, the taxonomy of lactic bacteria has been extensively redefined during the last few years. Lactic bacteria are essentially ubiquitous and normally present in food products. In particular, they are used for the industrial production of lactic acid, as agents for maturing of cheeses and for stored fodder and, together with the yeasts, are the constituents for leavening of oven products. In some cases the lactic bacteria may be responsible for degradative processes or pathologies in human beings. Some of them are intestinal bacteria and may be taken by human beings as probiotics. Historically the group comprises the genera *Lactobacillus, Leuconostoc, Pediococcus* and *Streptococcus,* but the genera of lactic bacteria of greatest importance in food technology also include *Aerococcus, Carnobacterium, Lactococcus, Oenococcus, Tetragenococcus, Vagococcus* and *Weisella.* Lactic bacteria have been thus defined because they produce mainly lactic acid from fermentation of the sugars. The lactic bacteria may be differentiated as homofermentative or heterofermentative bacteria, depending on how the hexose sugars ferment in non-limiting growth conditions. They are divided into homolactic (heterofermentative) organisms which produce only lactic acid and carbon dioxide or heterolactic (heterofermentative) organisms which produce 60-70% lactic acid and secondary compounds including acetic acid, ethanol and carbon dioxide.

In addition to the metabolic pathway of the sugars, the pathway of the citrate and the proteolytic activity are also important. In fact, lactic bacteria produce other compounds, in addition to the lactic and acetic acids which positively influence the aroma and taste of the fermented foods, such as the diacetyl which is produced by metabolism of the citrate.

Lactic bacteria have an exclusively fermentative metabolism also in the presence of oxygen. The absence of catalysis results in the impossibility of degrading the toxic forms of the oxygen, such as the hydrogen peroxide which forms during the oxidative metabolism (respiration); for this reason many lactic bacteria are anaerobic, but some species manage in any case to deactivate the peroxide and may therefore be defined as being aerotolerant or microaerophilic. From a nutritional point of view lactic bacteria have complex needs: they require a carbon source, generally glucose, require vitamins, mineral elements such as manganese and magnesium used as cofactors of the metabolism and a nitrogen source. A characteristic associated with lactic bacteria is their high resistance in an acid environment. This characteristic allows them to grow, up to a pH of less than 5.

Yeasts belong to the group of fungi and in particular to the category of Ascomycetes. Ascomycetes are fungi which produce spores in a characteristic structure called "ascus" (a name derived from the Greek meaning bag or sack). The group of Ascomycetes is a monophyletic group, i.e. all the species of the group are derived from a single common ancestor, and it is a group which has an extremely large number of organisms which includes about 75% of all the species of recorded fungi.

Yeasts are unicellular aerobic or microaerophilic organisms. In conditions of anaerobiosis their growth is significantly inhibited and their metabolism is of the fermentative type. Reproduction generally takes place by means of budding. They are characterized by having widely varying forms determined by the type of budding, including for example spherical forms, elliptical forms and elongated oval forms. More than one thousand species of yeasts have been catalogued based on the many different features which characterize them and which are used to define their taxonomy For example, in addition to the form, there is their ability or inability to form a mycelium, the form of the spores and the capacity to produce vegetative forms which are resistant in critical growth conditions.

### Example of embodiment

During a first stage, a first dose of flour is prepared (30% for example of the overall total amount of flour at the end of the procedure) to which milk yeast in a concentration of 50% (log6) is added. The milk yeast according to the present invention includes the following strains: *Saccharomyces cerevisiae, Lactobacillus Kefiranofaciens, Lactococcus lactis and Acetobacter orientalis.* These strains represent the colonies having the greatest concentration in the milk yeast.

It should be noted that the strains of the milk yeast identified above may be controlled over time, as explained in the patent application filed on the same day in the name of Ecamricert, and this control differs from natural yeast which is by definition ambient and therefore variable. Moreover, these strains, concentrated in polysaccharides called "beads", may be frozen and stored over time, unlike natural yeast which may be stored, but with certain time limits.

In an embodiment of the present disclosure, strains with low concentrations, of the order of 10⁶ (log6) CFU/g, are used. The use of a relatively low concentration of strains contributes to control of the culture and the simultaneous presence of several strains (differently from a single uniforming microorganism - Cauvain Young, Technology of breadmaking, page 79), to improved reproducibility of the method and to the aforementioned possibility of making bread using only three ingredients.

During a second stage a second dose of flour is prepared (30% for example of the total overall amount of flour at the end of the procedure) to which 50% milk and 0.1% pure cultures (concentrated at log 6 CFU/g) are added. The pure cultures include preferably two microorganisms, *Lactobacillus sanfranciscensis* and *il Leuconostoc citreum.* The inoculation was performed based on the data provided in the literature ("Accelerated Sourdough French bread" pages 778-782, Baking Science & Technology, Vol. 2, Third edition, E. J. Pyler.).

The first amount of flour with the added milk yeast and the second amount of flour with the added pure cultures underwent fermentation, for example for 24 h, at a temperature, for example of 28°C.

During a second step the remaining dose of flour (remaining 40% of flour relative to the overall total amount of flour at the end of the procedure), together with the added 40-50% of fermented milk (again log6), is mixed together with the two preceding doses and allowed to leaven for 4/5 hours.

At the end of leavening the bread which is obtained may undergo baking.

### Experimental tests

A number of experimental tests which confirm the leavening capacity of the aforementioned four strains of milk yeast are illustrated below.

A first sample C1 of flour with milk yeast provided with the four strains was prepared. A dish analysis of the leavening samples, left for 0, 1, 2, 3, 4 and 24 hours inside an oven at 28.5°C for leavening, was carried out. The results are expressed CFU/g.

**Table 1**

| | **TIME (HOURS)** | **0** | **1** | **2** | **3** | **4** | **24** |
|---|---|---|---|---|---|---|---|
| **C1** | **SAB** | 300,000 | 290,000 | 440,000 | present but <4,000,000 | 10,000,000 | present but <4,000,000 |
| | **MRS** | 57,000,000 | present but <4,000,000 | present but <4,000,000 | <10,000,000 | <1,000,000 | <1,000,000 |
| | **MRS+PYR** | <1,000,000 | present but <4,000,000 | present but <4,000,000 | present but <40,000,000 | <1,000,000 | 5,000,000 estimated |

Table 1 shows the data of the sample C1 which was treated on three types of substrate such as SAB, MRS and MRS+PYR.

**Table 2**

| | **TIME (HOURS)** | **0** | **1** | **2** | **3** | **4** | **24** |
|---|---|---|---|---|---|---|---|
| **C2** | **SAB** | 320,000 | 270,000 | 230,000 | present but <40,000,000 | 1,000,000 | <1,000,000 |
| **CINH4** | **MRS** | present but <4,000,000 | present but <4,000,000 | <1,000,000 | <1,000,000 | <10,000,000 | 9,000,000 estimated |
| | **MRS+PYR** | 27,000,000 | <1,000,000 | <1,000,000 | <1,000,000 | <10,000,000 | <1,000,000 |

A second sample C2 of flour with milk yeast provided with the four strains and ammonium chloride (CINH₄) was prepared.

Table 2 shows the data of the sample C2 which was treated on three types of substrate such as SAB (Sabouraud medium (medium for yeasts)), MRS (MRS medium, permissive medium for lactic bacteria) and MRS+PYR (MRS+pimaricin (medium for lactic bacteria + antifungal antibiotic).

Tables 3-7 shows the results of analyses divided up into lactic bacteria and yeasts

**Table 3**

| C1 | TIME | CFU/g | CFU/g | CFU/g |
|---|---|---|---|---|
| | HOURS | YEASTS-C1 | LACTIC BACTERIA-C1-MRS | LACTIC BACTERIA-C1-MRS-PYR |
| | 0 | 300,000 | 57,000,000 | 1,000,000 |
| | 1 | 290,000 | 4,000,000 | 4,000,000 |
| | 2 | 440,000 | 4,000,000 | present but < 4,000.000 |
| | 3 | 4,000,000 | 10,000,000 | present but < 40,000,000 |
| | 4 | 10,000,000 | 1,000,000 | < 1,000,000 |
| | 24 | 4,000,000 | 1,000,000 | 5,000,000 estimated |

**Table 4**

| **C2** | TIME | CFU/g | CFU/g | CFU/g |
|---|---|---|---|---|
| | HOURS | YEASTS-C2 | LACTIC BACTERIA-C2-MRS | LACTIC BACTERIA-C2-MRS-PYR |
| | 0 | 320,000 | 4,000,000 | 27,000,000 |
| | 1 | 270,000 | 4,000,000 | < 1,000,000 |
| | 2 | 230,000 | 1,000,000 | < 1,000.000 |
| | 3 | 40,000,000 | 1,000,000 | < 1,000,000 |
| | 4 | 1,000,000 | 10,000,000 | < 10,000,000 |
| | 24 | 1,000,000 | 9,000,000 | < 1,000,000 |

**Table 5**

| **YEASTS** | TIME | CFU/g | CFU/g |
|---|---|---|---|
| | HOURS | YEASTS-C1 | YEASTS-C2 |
| | 0 | 300,000 | 320,000 |
| | 1 | 290,000 | 270,000 |
| | 2 | 440,000 | 230,000 |
| | 3 | 4,000,000 | 40,000,000 |
| | 4 | 10,000,000 | 1,000,000 |
| | 24 | 4,000,000 | 1,000,000 |

**Table 6**

| **LACTIC BACTERIA** | TIME | CFU/g | CFU/g |
|---|---|---|---|
| | HOURS | LACTIC BACTERIA-C1-MRS | LACTIC BACTERIA-C2-MRS |
| | 0 | 57,000,000 | 4,000,000 |
| | 1 | 4,000,000 | 4,000,000 |
| | 2 | 4,000,000 | 1,000,000 |
| | 3 | 10,000,000 | 1,000,000 |
| | 4 | 1,000,000 | 10,000,000 |
| | 24 | 1,000,000 | 9,000,000 |

**Table 7**

| **LACTIC BACTERIA** | TIME | CFU/g | CFU/g |
|---|---|---|---|
| | HOURS | LACTIC BACTERIA-C1-MRS-PYR | LACTIC BACTERIA-C2-MRS-PYR |
| | 0 | 1,000,000 | 27,000,000 |
| | 1 | 4,000,000 | 1,000,000 |
| | 2 | 4,000,000 | 1,000,000 |
| | 3 | 40,000,000 | 1,000,000 |
| | 4 | 1,000,000 | 10,000,000 |
| | 24 | 5,000,000 | 1,000,000 |

The results of the tests confirmed a sufficient leavening capacity.

A breadmaking test using a strain or pure culture was also carried out.
**Strain used:** *Lactobacillus sanfrancisciensis* (strain TH933) 10^7 (dose prepared for inoculating 1 kg flour with 10^7)
**Breadmaking test using:**
70% flour + 39% water + 2% single strain + 0.4% CINH4 + 1% vinegar + (0.5% malt)

| **Ingredient** | **Dose per 100g flour** | **Dose per 500g flour** |
|---|---|---|
| flour | 100 | 500 |
| Water | 39 | 195 (+30ml) * |
| L. sanfrancisciensis | 2 | (6.63g) ** |
| CINH4 | 0.4 | 2 |
| White vinegar | 1 | 5 |
| malt | 0.5 | 2.5 |

| | | |
|---|---|---|
| * a further 30 ml added because mixture too hard ** half pre-dosed phial provided for inoculating 1 kg | | |

| **Test number Microorganism** | **1** | **2** | **3** | **4** | **5** |
|---|---|---|---|---|---|
| **Temperature/time** | T0 | 4°C/8h | 28°C/8h | 4°C/24h | 28°C/24h |

| | | | | | |
|---|---|---|---|---|---|
| **Times:** Counts at T=0, 8h, 24h **Temperatures:** 4°C and 28°C | | | | | |

Using the mixture 5 doses of about 100 g for each condition considered were prepared. The initial pH was 5.38. The initial temperature of the mixture was 30.1 °C.
The samples 1 (t=0), 2 (t=8h, 4°C), 3 (t=8h, 28°C), after being analyzed, were left at room temperature (temperature of about 28-30°C). Both the sample which was left constantly at room temperature and the dose which remained 8 hours in the oven and then at room temperature underwent leavening, while the sample which was left 8 hours at room temperature and then at room temperature did not undergo leavening. This may be an indication that at 4°C the *Lactobacillus sanfrancisciensis (strain TH933)* is blocked and that the presence of pure cultures contributes to leavening.
**Dish counts:** The counts were carried out at T=0, after 8h leavening (at 4°C or at 28°C) and after 24 h leavening (at 4°C or at 28°C).

## Claims

1. A method for making bread or for producing a leavened food product, wherein the method includes at least
- a first inoculation stage, or first inoculation, wherein a first dose of flour is mixed with yeast produced from a milk substrate to form a first portion of dough, wherein said yeast produced from milk substrate is obtained by nourishing lactic bacteria with the sugars of the milk, said yeast produced from milk substrate being in a concentration of less than 10⁹ CFU/g;
- a second inoculation stage, or second inoculation, wherein a second dose of flour is mixed with one or more pure cultures of microorganisms to form a second portion of dough;
wherein the first portion of dough and the second portion of dough are mixed to initiate a fermentation of the dough;
and wherein the method includes a third step wherein a third dose of flour is mixed with the dough after fermentation to start a leavening step,
wherein said yeast produced from milk substrate and said one or more pure cultures do not comprise beer yeast added to the milk substrate;
and wherein said pure cultures include *Lactobacillus sanfranciscensis* and/or *Leuconostoc citreum* and wherein the yeast produced from a milk substrate includes *Saccharomyces cerevisiae, Lactobacillus Kefiranofaciens, Lactococcus lactis* and *Acetobacter orientalis.*

2. Method according to claim 1, wherein the amount of flour of each dose is between 20% and 40% of the total amount of flour used.

3. Method according to claim 1 or 2, wherein the amount of the first dose and the amount of the second dose is 30% of the total amount of flour used.

4. Method according to any one of the preceding claims, wherein the amount of the third dose is 40% of the total amount of flour used.

5. Method according to any one of the preceding claims, wherein, in order to make bread, at least two ingredients such as flour and fermented milk, or three ingredients such as flour, fermented milk, and salt, without water, are used.

6. Method according to claim 5, wherein, in order to make bread, only said two or three ingredients, without the addition of fats, sugars, beer yeast or added mother yeast, or other additions, are used.

7. Method according to any one of the preceding claims, wherein the yeasts of said yeast produced from milk substrate and said one or more pure cultures are in a concentration of less than 10⁹ CFU/g, preferably less than 10⁷ CFU/g and even more preferably of the order of 10⁶ CFU/g.

8. Use of yeast produced from milk substrate in combination with pure cultures of microorganisms for the fermentation of a dose of flour, wherein said yeast produced from milk substrate is obtained by nourishing lactic bacteria with the milk sugars, said yeast produced from milk substrate being in a concentration of less than 10⁹ CFU/g, wherein said yeast produced from milk substrate and said one or more pure cultures do not comprise beer yeast added to the milk substrate, and wherein the yeast from milk substrate includes *Saccharomyces cerevisiae, Lactobacillus Kefiranofaciens, Lactococcus lactis* and *Acetobacter orientalis,* and said pure cultures include *Lactobacillus sanfranciscensis* and/or *Leuconostoc citreum.*

9. Use according to claim 8, wherein the yeasts of said yeast produced from milk substrate and said one or more pure cultures are each in a concentration of less than 10⁹ CFU/g, preferably less than 10⁷ CFU/g and even more preferably of the order of 10⁶ CFU/g.

10. Bread or leavened food product obtained according to the method of any one of claims 1 to 7.

11. Bread or leavened food product according to claim 10, including only flour and fermented milk which acts as a leavening agent, and optionally salt, wherein the leavening agent includes yeast produced from milk substrate.

## Patentansprüche

1. Ein Verfahren zur Herstellung von Brot oder zur Herstellung eines vergorenen Nahrungsmittelprodukts, wobei das Verfahren mindestens umfasst:
- eine erste Impfphase oder erste Impfung, bei der eine erste Dosis Mehl mit aus einem Milchsubstrat hergestellter Hefe gemischt wird, um eine erste Teigportion zu bilden, wobei die aus einem Milchsubstrat hergestellte Hefe durch die Fütterung von Milchsäurebakterien mit den Zuckern der Milch erhalten wird, wobei die aus einem Milchsubstrat hergestellte Hefe in einer Konzentration von weniger als 10⁹ CFU / g vorliegt;
- eine zweite Impfphase oder zweite Impfung, bei der eine zweite Dosis Mehl mit einer oder mehreren Reinkulturen von Mikroorganismen gemischt wird, um eine zweite Teigportion zu bilden,
wobei die erste Teigportion und die zweite Teigportion zur Initiierung einer Fermentation gemischt werden;
und wobei das Verfahren einen dritten Schritt umfasst, bei dem eine dritte Dosis Mehl nach der Fermentation mit dem Teig gemischt wird, um einen Gärschritt, Anstellschritt oder Triebschritt zu beginnen;
wobei die aus einem Milchsubstrat hergestellte Hefe und die eine oder mehreren Reinkulturen keine dem Milchsubstrat hinzugefügte Bierhefe umfassen;
und wobei die Reinkulturen *Lactobacillus sanfranciscensis* und / oder *Leukonostoc citreum* umfasst, und wobei die aus einem Milchsubstrat hergestellte Hefe *Saccharomyces cerevisiae, Lactobacillus Kefiranofaciens, Lactococcus lactis* und *Acetobacter orientalis* umfasst.

2. Verfahren gemäß Anspruch 1, wobei die Mehlmenge jeder Dosis zwischen 20% und 40% der gesamten verwendeten Mehlmenge beträgt.

3. Verfahren gemäß Anspruch 1 oder 2, wobei die Menge der ersten Dosis und die Menge der zweiten Dosis 30% der gesamten verwendeten Mehlmenge beträgt.

4. Verfahren gemäß einem der vorhergehenden Ansprüche, wobei die Menge der dritten Dosis 40% der gesamten verwendeten Mehlmenge beträgt.

5. Verfahren gemäß einem der vorhergehenden Ansprüche, bei dem zur Herstellung von Brot mindestens zwei Bestandteile wie Mehl und fermentierte Milch oder drei Bestandteile wie Mehl, fermentierte Milch und Salz ohne Wasser verwendet werden.

6. Verfahren gemäß Anspruch 5, wobei zur Herstellung von Brot nur die zwei oder drei Bestandteile ohne Zusatz von Fetten, Zuckern, Bierhefe oder hinzugefügter Mutterhefe oder andere Zusätze verwendet werden.

7. Verfahren gemäß einem der vorhergehenden Ansprüche, wobei die Hefen aus der aus Milchsubstrat hergestellten Hefe und der einen oder mehreren Reinkulturen in einer Konzentration von weniger als 10⁹ CFU / g, vorzugsweise weniger als 10⁷ CFU / g, und noch bevorzugter in der Größenordnung von 10⁶ CFU / g vorliegen.

8. Verwendung von Hefe, die aus Milchsubstrat in Kombination mit Reinkulturen von Mikroorganismen hergestellt wird, zur Fermentation einer Mehldosis, wobei die aus Milchsubstrat hergestellte Hefe durch Ernährung von Milchsäurebakterien mit den Milchzuckern erhalten wird, wobei die aus Milchsubstrat hergestellte Hefe in einer Konzentration von weniger als 10⁹ CFU / g vorliegt, wobei die aus Milchsubstrat und den einen oder mehreren Reinkulturen hergestellte Hefe keine zu dem Milchsubstrat hinzugefügte Bierhefe umfasst, und wobei die Hefe aus Milchsubstrat *Saccharomyces cerevisiae, Lactobacillus Kefiranofaciens, Lactococcus lactis* und *Acetobacter orientalis* umfasst, und wobei die Reinkulturen *Lactobacillus sanfranciscensis* und / oder *Leuconostoc citreum* umfassen.

9. Verwendung gemäß Anspruch 9, wobei die Hefen der aus Milchsubstrat hergestellten Hefe und der einen oder mehreren Reinkulturen jeweils eine Konzentration von weniger als 10⁹ CFU / g, vorzugsweise weniger als 10⁷ CFU / g, und noch bevorzugter in der Größenordnung von 10⁶ CFU / g vorliegen.

10. Brot oder vergorenes Nahrungsmittelprodukt, erhalten gemäß dem Verfahren gemäß einem der Ansprüche 1 bis 7.

11. Brot oder vergorenes Nahrungsmittelprodukt gemäß Anspruch 10, umfassend lediglich Mehl und fermentierte Milch, die als Backtriebmittel agiert, und gegebenenfalls Salz, wobei das Backtriebmittel aus Milchsubstrat hergestellte Hefe umfasst.

## Revendications

1. Procédé pour faire du pain ou pour produire un produit alimentaire levé, dans lequel le procédé comprend au moins
- une première étape d'inoculation, ou une première inoculation, dans laquelle une première dose de farine est mélangée avec une levure produite à partir d'un substrat à base de lait pour former une première portion de pâte, et dans laquelle ladite levure produite à partir d'un substrat à base de lait est obtenue par alimentation de ferments lactiques avec les sucres du lait, ladite levure produite à partir d'un substrat à base de lait étant à une concentration inférieure à 10⁹ UFC/g ;
- une deuxième étape d'inoculation, ou deuxième inoculation, dans laquelle une deuxième dose de farine est mélangée avec une ou plusieurs cultures pures de microorganismes pour former une deuxième portion de pâte ;
dans lequel la première portion de pâte et la deuxième portion de pâte sont mélangées pour initier une fermentation de la pâte ;
et dans lequel le procédé comprend une troisième étape dans laquelle une troisième dose de farine est mélangée avec la pâte après fermentation pour démarrer une étape de levage,
dans lequel ladite levure produite à partir d'un substrat à base de lait et lesdites une ou plusieurs cultures pures ne comprennent pas de levure de bière ajoutée au substrat à base de lait ;
et dans lequel lesdites cultures pures comprennent *Lactobacillus sanfranciscensis* et/ou *Leuconostoc citreum* et dans lequel la levure produite à partir d'un substrat à base de lait comprend *Saccharomyces cerevisiae, Lactobacillus kefiranofaciens, Lactocossus lactis* et *Acetobacter orientalis.*

2. Procédé selon la revendication 1, dans lequel la quantité de farine de chaque dose est comprise entre 20 % et 40 % de la quantité totale de farine utilisée.

3. Procédé selon la revendication 1 ou 2, dans lequel la quantité de la première dose et la quantité de la deuxième dose représentent 30 % de la quantité totale de farine utilisée.

4. Procédé selon l'une quelconque des revendications précédentes, dans lequel la quantité de la troisième dose représente 40 % de la quantité totale de farine utilisée.

5. Procédé selon l'une quelconque des revendications précédentes, dans lequel, afin de faire du pain, au moins deux ingrédients tels que de la farine et du lait fermenté, ou trois ingrédients tels que de la farine, du lait fermenté et du sel, sans eau, sont utilisés.

6. Procédé selon la revendication 5, dans lequel, afin de faire du pain, seulement lesdits deux ou trois ingrédients, sans addition de graisses, sucres, levure de bière ou levure mère ajoutée, ou autres additions, sont utilisés.

7. Procédé selon l'une quelconque des revendications précédentes, dans lequel les levures de ladite levure produite à partir d'un substrat à base de lait et desdites une ou plusieurs cultures pures sont à une concentration inférieure à 10⁹ UFC/g, de préférence inférieure à 10⁷ UFC/g et mieux encore de l'ordre de 10⁶ UFC/g.

8. Utilisation d'une levure produite à partir d'un substrat à base de lait en combinaison avec des cultures pures de microorganismes pour la fermentation d'une dose de farine, dans laquelle ladite levure produite à partir d'un substrat à base de lait est obtenue par alimentation de ferments lactiques avec les sucres du lait, ladite levure produite à partir d'un substrat à base de lait étant à une concentration inférieure à 10⁹ UFC/g, dans laquelle ladite levure produite à partir d'un substrat à base de lait et lesdites une ou plusieurs cultures pures ne comprennent pas de levure de bière ajoutée au substrat à base de lait, ou dans laquelle la levure provenant d'un substrat à base de lait comprend *Saccharomyces cerevisiae, Lactobacillus kefiranofaciens, Lactocossus lactis* et *Acetobacter orientalis,* et lesdites cultures pures comprennent *Lactobacillus sanfranciscensis* et/ou *Leuconostoc citreum.*

9. Utilisation selon la revendication 8, dans laquelle les levures de ladite levure produite à partir d'un substrat à base de lait et desdites une ou plusieurs cultures pures sont chacune à une concentration inférieure à 10⁹ UFC/g, de préférence inférieure à 10⁷ UFC/g et mieux encore de l'ordre de 10⁶ UFC/g.

10. Pain ou produit alimentaire levé obtenu conformément au procédé de l'une quelconque des revendications 1 à 7.

11. Pain ou produit alimentaire levé selon la revendication 10, comprenant uniquement de la farine et du lait fermenté qui agit comme un agent de levage, et éventuellement du sel, dans lequel l'agent de levage comprend de la levure produite à partir d'un substrat à base de lait.
